(19) Europäisches Patentamt
European Patent Office
Office européen des brevets

(11) **EP 1 764 440 B1**

(12) **EUROPÄISCHE PATENTSCHRIFT**

(45) Veröffentlichungstag und Bekanntmachung des Hinweises auf die Patenterteilung:
**11.03.2009 Patentblatt 2009/11**

(21) Anmeldenummer: **06119873.5**

(22) Anmeldetag: **31.08.2006**

(51) Int Cl.:
*D06N 3/12* (2006.01)    *D06M 15/643* (2006.01)
*C09D 183/04* (2006.01)    *C08L 83/04* (2006.01)

(54) **Textilbeschichtung**

Textile coating composition

Composition pour le rêvetement de textile

(84) Benannte Vertragsstaaten:
**BE DE FR GB NL PL**

(30) Priorität: **08.09.2005 DE 102005042755**

(43) Veröffentlichungstag der Anmeldung:
**21.03.2007 Patentblatt 2007/12**

(73) Patentinhaber: **Wacker Chemie AG**
**81737 München (DE)**

(72) Erfinder: **Müller, Johann**
**94357 Konzell (DE)**

(74) Vertreter: **Gössmann, Christoph Tassilo**
**Wacker Chemie AG**
**Hanns-Seidel-Platz 4**
**81737 München (DE)**

(56) Entgegenhaltungen:
**EP-A- 0 752 450        EP-A- 1 127 920**
**EP-A1- 0 664 322        EP-A1- 0 985 710**
**EP-A2- 0 735 100        EP-A2- 0 757 080**
**WO-A1-03/106759        FR-A1- 2 840 912**

**Beschreibung**

Die Erfindung betrifft eine Zusammensetzung, ein Verfahren und einen Formkörper und ein beschichtetes textiles Flächengebilde.

In WO 03/106759 und Fr 2840912 wird ein Verfahren zur Beschichtung von Bautextilien mit zumindest einer Schicht von Siliconelastomer, indem eine wässrige Siliconemulsion verwendet wird, beschrieben.

EP 0 915 937 B1 beschreibt Siliconbeschichtungsmassen für textile Substrate, die Siliconharz enthalten und durch Anlagerung von SiH an Si-Vinyl vernetzen.

Die Nachteile sind, dass der Vernetzungsprozess nur thermisch beschleunigt werden kann und somit die komplette Vulkanisation durch Wärmezufuhr zu Ende gebracht werden muss. Das limitiert den gesamten Beschichtungsprozess bzw. den gesamten Prozess zur Herstellung eines Formartikels oder eines beschichteten Flächengebildes in der Geschwindigkeit.

Aufgabe der Erfindung ist es, den Stand der Technik zu verbessern, insbesondere eine Zusammensetzung zu Verfügung zu stellen, die schnell vernetzt, wenn nötig auch noch bei Raumtemperatur nachvernetzt und lagerstabil ist.

Die Aufgabe wird durch die Erfindung gelöst.

Ein Gegenstand der Erfindung ist eine Zusammensetzung bestehend aus:

A) Organopolysiloxane, die Kohlenwasserstoffreste mit aliphatischen Kohlenstoff-Kohlenstoff-Mehrfachbindungen aufweisen
B) gegebenenfalls Inhibitoren
C) Platinkatalysator
D) gegebenenfalls Haftvermittler
E) Kondensationskatalysatoren,
dadurch gekennzeichnet, dass die Zusammensetzung noch
F) Polysiloxane mit mindestens 2 Si-OH bzw. 2 Si-OR Funktionen enthält, wobei sie T und / oder Q Funktionen enthalten und
G) Dimethylpolysiloxane mit mindestens 3 SiH-Funktionen enthält.

Als Organopolysiloxane (A) werden vorzugsweise lineare oder verzweigte Organopolysiloxane aus Einheiten der allgemeinen Formel I

$$R^1{}_a R^2{}_b SiO_{\frac{4-a-b}{2}} \qquad (I),$$

eingesetzt, wobei

$R^1$ einwertige, gegebenenfalls mit Halogenatomen substituierte $C_1$- bis $C_{10}$-Kohlenwasserstoffreste, die frei sind von aliphatischen Kohlenstoff-Kohlenstoff-Mehrfachbindungen,
$R^2$ Wasserstoffatome, Hydroxylgruppen oder einwertige Kohlenwasserstoffreste mit aliphatischer Kohlenstoff-Kohlenstoff-Mehrfachbindung mit 2 bis 8 Kohlenstoffatomen je Rest,
$a$ die Werte 0, 1, 2 oder 3 und
$b$ die Werte 0, 1 oder 2 bedeuten,

mit der Maßgabe, dass durchschnittlich mindestens 2 Reste $R^2$ je Molekül vorliegen.

Beispiele für unsubstituierte Kohlenwasserstoffreste $R^1$ sind $C_1$- bis $C_{10}$-Alkyl-, $C_1$- bis $C_{10}$-Alkaryl- oder $C_1$- bis $C_{10}$-Aralkylreste deren Alkylteil gesättigt ist, oder $C_1$- bis $C_{10}$-Arylreste. Beispiele für Alkylreste $R^1$ sind der Methyl-, Ethyl- , n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexyl- und Cyclohexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Cycloalkylreste, wie der Cyclohexylrest; Beispiele für Alkarylreste $R^1$ sind der α- und β- Phenylethylrest; Beispiele für Aralkylreste $R^1$ sind der Benzylrest und der 2,4-Diethylbenzylrest; Beispiele für Arylreste $R^1$ sind der Phenylrest und der Naphthylrest.
Vorzugsweise bedeutet $R^1$ $C_1$- bis $C_6$-Alkylreste und Phenylreste, insbesondere Methyl- und Ethylreste.

Beispiele für mit Halogenatomen substituierte Kohlenwasserstoffreste $R^1$ sind der 3,3,3-Trifluor-n-propylrest, der 2,2,2,2',2',2'-Hexafluorisopropylrest, der Heptafluorisopropylrest, der 3-Chlor-n-propylrest, der 2-Ethylbromidrest und der 3-Propylbromidrest. Vorzugsweise sind die Reste **R¹** nicht substituiert.

Beispiele für einwertige Kohlenwasserstoffreste mit aliphatischer Kohlenstoff-Kohlenstoff-Mehrfachbindung mit 2 bis 8 Kohlenstoffatomen je Rest **R²** sind Alkenylreste, wie der Vinyl-, 5-Hexenyl-, 1-Propenyl-, Allyl-, 1-Butenyl- und 1-Pentenylrest; und Alkinylreste, wie der Ethinyl-, Propargyl-und 1-Propinylrest.

Vorzugsweise weisen die Organopolysiloxane (A) mindestens 90, insbesondere mindestens 95, Mol-% Einheiten der allgemeinen Formel I auf, in denen die Summe a+b = 2 beträgt.

Vorzugsweise weisen die Organopolysiloxane (A) mindestens 60, insbesondere mindestens 80, speziell mindestens 95 Mol-% Einheiten der allgemeinen Formel I auf, in denen b den Wert 0 hat.

Die Organopolysiloxane (A), die Kohlenwasserstoffreste mit aliphatischen Kohlenstoff-Kohlenstoff-Mehrfachbindungen besitzen, weisen vorzugsweise durchschnittlich 2 bis 10, insbesondere 2 bis 4 aliphatische Kohlenstoff-Kohlenstoff-Mehrfachbindungen pro Molekül auf. Vorzugsweise weisen die endständigen Einheiten der allgemeinen Formel I aliphatische Kohlenstoff-Kohlenstoff-Mehrfachbindungen auf. Vorzugsweise sind die aliphatischen Kohlenstoff-Kohlenstoff-Mehrfachbindungen Doppelbindungen, bevorzugt sind vinylterminierte Polysiloxane, besonders bevorzugt sind vinylterminierte Dimethylpolysiloxane. Die Organopolysiloxane (A) können ein Molekulargewicht von 186 bis 1000000 g/Mol aufweisen. Bevorzugt ist der Bereich von 260 bis 500000 g/Mol. Die Formulierung kann auf einem Polymer mit enger Molekulargewichtsverteilung aufgebaut sein, es können aber auch Polymere mit verschiedenen Molekulargewichten eingesetzt werden. Polymere mit Vinylfunktionen in der Kette können in der Formulierung (mit) verwendet werden.

Bei dem erfindungsgemäß eingesetzten, kondensationsfähige Gruppen aufweisenden Organopolysiloxan (A) kann es sich um eine einzelne Art wie auch um ein Gemisch aus mindestens zwei Arten derartiger kondensationsfähige Gruppen aufweisender Organopolysiloxane handeln.

Die Organopolysiloxane (G) mit mindestens 3 Si-gebundenen Wasserstoffatomen weisen vorzugsweise durchschnittlich 2 bis 50, insbesondere 5 bis 20 Si-gebundene Wasserstoffatome pro Molekül auf. Die Organopolysiloxane (1b) besitzen vorzugsweise eine durchschnittliche Viskosität von mindestens 10, insbesondere mindestens 30 mPa·s, und vorzugsweise höchstens $10^6$, insbesondere höchstens 10000 mPa·s bei 25°C.

Die Organopolysiloxane (A), die Si-gebundene Hydroxylgruppen aufweisen, besitzen vorzugsweise 2 bis 4 Hydroxylgruppen pro Molekül. Vorzugsweise besitzen sie endständige Hydroxylgruppen. Die Organopolysiloxane (A) besitzen vorzugsweise eine durchschnittliche Viskosität von mindestens 10, insbesondere mindestens 1000 mPa·s, und vorzugsweise höchstens $10^8$, insbesondere höchstens 5 x $10^6$ mPa·s bei 25°C.

Als Füllstoffe sind bevorzugt verstärkende Füllstoffe, wie pyrogen hergestellte Kieselsäure und gefällte Kieselsäure. Besonders bevorzugt sind verstärkende Füllstoffe, die durch eine Vorhydrophobierung(analog Patent EP0378785B1), z.B. mit Organosilanen, hergestellt werden und eine bevorzugte BET-Oberfläche von mindestens 50 $m^2$/g, insbesondere mindestens 100 $m^2$/g, besonders bevorzugt von mindestens 150 $m^2$/g haben. Die Menge des Füllstoffs kann 10 bis 60 Gew.% der Gesamtmischung ausmachen, wobei bevorzugt 15 bis 45 Gew.% und besonders bevorzugt 20 bis 40 Gew.% sind.

Inhibitoren (B) sind an sich bekannt. Beispiele hierfür sind acetylenisch ungesättigte Alkohole, wie 3-Methyl-1-butin-3-ol, 1-Ethinylcyclohexan-1-ol, 3,5-Dimethyl-1-hexin-3-ol und 3-Methyl-1-pentin-3-ol. Beispiele für Inhibitoren auf Vinylsiloxanbasis sind 1,1,3,3-Tetramethyl-1,3-divinylsiloxan und vinylgruppenhaltige Poly-, Oligo- und Disiloxane.

Als Platinkatalysatoren (C) werden vorzugsweise Platinmetalle und/oder deren Verbindungen eingesetzt, vorzugsweise Platin und/oder dessen Verbindungen. Beispiele für solche Katalysatoren sind metallisches und fein verteiltes Platin, das sich auf Trägern, wie Siliziumdioxid, Aluminiumoxid oder Aktivkohle befinden kann, Verbindungen oder Komplexe von Platin, wie Platinhalogenide, z.B. PtCl$_4$, H$_2$PtCl$_6$*6H$_2$O, Na$_2$PtCl$_4$*4H$_2$O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H$_2$PtCl$_6$*6H$_2$O und Cyclohexanon, Platin-Vinylsiloxankomplexe, insbesondere Platin-Divinyltetramethyldisiloxankomplexe mit oder ohne Gehalt an nachweisbarem anorganisch gebundenen Halogen, Bis-(gammapicolin)-platindichlorid sowie Umsetzungsprodukte von Platintetrachlorid mit Olefin und primärem Amin oder sekundärem Amin oder primärem Amin und sekundärem Amin, wie das Umsetzungsprodukt aus in 1-Octen gelöstem Platintetrachlorid mit sec.-Butylamin, oder Ammonium-Platinkomplexe, Platinkatalysatoren für 1-K-Systeme, wie mikroverkapselte Platinkomplexe oder z.B. Platin-Acetylid-Komplexe.

Der Übergangsmetallkatalysator wird vorzugsweise in Mengen 0,5 bis 500 Gewichts-ppm (Gewichtsanteile je Million Gewichtsteilen), insbesondere 2 bis 400 Gewichts-ppm, jeweils berechnet als elementares Übergangsmetall und bezogen auf das Gesamtgewicht der A- und B-Komponente eingesetzt.

D) Die Formulierung kann Silanhaftvermittler enthalten. Beispiele hierfür sind: Vinyltrialkoxysilane, Methacryloxypropyltrialkoxysilane, Epoxypropyltrialkoxysilane, Silane mit Acetoxygruppen, und Gemische daraus oder deren Hydrolysate beziehungsweise Mischhydrolysate.

E) Die Formulierung kann Katalysatoren zur Beschleunigung der Kondensationsreaktion enthalten.

Beispiele hierfür sind Metallchelate wie Aluminiumacetylacetonat, Calciumacetylacetonat oder aber Organische Salze von Metallen wie Zirkon oder Titan. Beispiele hierfür sind Zirkonbutylat, Zirkonisopropylat, Titantetrabutylat, Titanisopropylat sowie (Organo-) Metallverbindungen, wie beispielsweise die Salze von Carbonsäuren, die Alkoholate und die Halogenide der Metalle, Zn, Zr, Ti, Fe, Ba, Ca und Mn. Besonders bevorzugt sind (Organo-)Zirkonverbindungen von Carbonsäuren mit 1 bis 18 Kohlenstoffatomen. Die Formulierung kann auch Gemische aus diesen Verbindungen enthalten.

F) Polysiloxane mit mindestens 2 Si-OH bzw. 2 Si-OR Funktionen.

Diese Polysiloxane enthalten auch T und / oder Q Funktionen (also als Siliconharze definiert sein).

A) Vinylpolymere sind der Hauptbestandteil der erfindungsgemäßen Formulierung und im Folgenden immer mit 100 Gewichtsteilen angenommen. Dies gilt als Bezugsgröße.

B) Bezogen auf 100 Gew. Teile der Komponente A werden 0,01 bis 3 Gew. Teile Inhibitor eingesetzt.
Bevorzugte Mengen sind 0,02 bis 1 Gewichtsteile. Besonders bevorzugt sind 0,03 bis 0,5 Gewichtsteile.

C) Platinkatalysatoren werden in Mengen eingesetzt, dass ein Gesamtplatingehalt in der fertigen Formulierung von 0,01 bis 1000 ppm erzielt wird.
Bevorzugt sind 0,05 bis 500 ppm, besonders bevorzugt: 0,1 bis 100 ppm

D) Haftvermittler können in Mengen von 0,01 bis 20 Gewichtsteilen enthalten sein.
Bevorzugt sind 0,05 bis 10 Gewichtsteile, besonders bevorzugt sind 0,1 bis 5 Gewichtsteile.

E) Kondensationskatalysatoren können in Mengen von 0,01 bis 20 Gewichtsteile enthalten sein.
Bevorzugt sind 0,05 bis 10 Gewichtsteile, besonders bevorzugt 0,1 bis 5 Gewichtsteile.

F) Polysiloxane mit Si-OH und/oder Si-OR Funktionen können in Mengen von 0,1 bis 70 Teilen enthalten sein.
Bevorzugt sind 0,5 bis 50 Gewichtsteile, besonders bevorzugt 1 bis 40 Gewichtsteile.

G) Vernetzer können in Mengen von 0,05 bis 20 Gewichtsteilen eingesetzt werden.
Bevorzugt sind 0,1 bis 10 Gewichtsteile, besonders bevorzugt 0,5 bis 5 Gewichtsteile.

Die erfindungsgemäßen Beschichtungsmassen werden durch einfaches Vermischen der Komponenten A bis F in den bereits beschriebenen Mengen hergestellt.
Der Mischprozess kann mit einfachen Rührgeräten wie z.B. Flügelrührer, Planetenmischer, Turborührer oder Dissolver erfolgen. Das Rührgefäß kann offen oder geschlossen sein. Der Mischvorgang wird bevorzugt bei Umgebungstemperatur durchgeführt, jedoch sind auch Temperaturen von - 40 °C bis + 150 °C möglich.
Es können aber auch Reaktionen, wie Polymerisation, Kondensationen oder Umsetzung an reaktiven Gruppen durchgeführt werden. Dies erfordert dann eine thermische Kontrolle der Reaktionsabläufe. Solche Verfahren werden zwischen 0 °C und 150 °C durchgeführt, bevorzugt bei Temperaturen zwischen 10 °C und 120 °C. Der Einfachheit halber werden die Zusammensetzungen bei normalem Luftdruck hergestellt. Die Herstellung kann aber ebenso bei Überdruck bis zu 20 bar oder im Vakuum bis 20 mbar sowie Schutzgas stattfinden
Der Mischprozess kann diskontinuierlich oder auch kontinuierlich in dafür geeigneten Anlagen durchgeführt werden. Beispiele für solche Anlagen sind Busskneter, statische oder dynamische Durchflussmischer.

Mögliche Einsatzgebiete der neuen Zubereitung sind:

Beschichtungen von textilen Flächengebilden wie z.B. Gewebe, Vliese, Gestricke, Gelege, Filze, Wirkware oder Kettwirkware.
Die textilen Flächengebilde könne gefertigt sein aus Naturfasern, wie Baumwolle, Wolle, Seide etc. oder auch aus Kunstfasern wie Polyester, Polyamid, Aramid etc. Auch aus Mineralfasern wie Glas oder Silicaten oder Metallfasern können die Textilien gefertigt sein.
Die mit den erfindungsgemäßen Massen beschichteten textilen Flächengebilde können für technische Anwendungen wie z.B. Förderbänder, Kompensatoren, Schutzkleidung, Markisen, Isolationsbereich oder Airbags eingesetzt werden.
Aber auch zur Anwendung im Hochleistungstextilbereich, wie Gleitschirme, Heißluftballons, Fallschirme, Outdoorkleidung, Sporttextilien, Freizeitkleidung, Freizeitartikel wie Zelte oder Rucksäcke, Segel und Streetwear können die erfindungsgemäßen Massen kommen.

Auch zum Beschichten von Folien oder Oberflächen aus mineralischen Stoffen, Kunststoffen, Naturstoffen oder Metallen können die beschriebenen Produkte verwendet werden.

Weiterhin können die beschriebenen Massen zur Herstellung von Formartikeln verwendet werden.

Des Weiteren können viele Substrate, wie beispielsweise Papier, mineralische Baustoffe, Kunststoffe, Holz und vielen anderen Unterlagen mit den erfindungsgemäßen Formulierungen behandelt werden.

Das Aufbringen der derart hergestellten erfindungsgemäßen Formulierungen auf textile Materialien erfolgt durch in der Textilveredelungsindustrie gängige Verfahren, wie Pflatschen, Tauchen mit oder ohne anschließendem Foulard, Rakeln oder Beschichten durch Walzenauftrag, Siebdruck, Pinseln oder Rasterwalzen oder Extrusionsverfahren, Spritz - oder Sprühverfahren, oder die erfindungsgemäßen Formulierungen können auch in beliebiger Art und Weise aufgebracht werden. Auch alle Arten von Rollenbeschichtungen, wie Gravurwalzen, Pflatschen oder Auftrag über Mehrwalzensysteme sind möglich.

Die beschriebenen Massen eignen sich auch zum Laminieren und zur Verarbeitung im Transferverfahren.

Formartikel können im Spritzguß oder Gießverfahren hergestellt werden.

Das Trocknen und Vulkanisieren erfolgt in üblichen Wärmekanälen, die durch Heißluft oder Infrarotstrahlung oder andere Energiequellen temperiert werden können. Der bevorzugte Temperaturbereich ist 50 - 200°C. Da einige Textilarten nicht besonders temperaturbeständig sind, wird die obere Temperaturgrenze meist durch die Temperaturbeständigkeit des Textils limitiert. Die Verweilzeit im Trockenofen ist von der Temperatur im Wärmekanal abhängig und ist bevorzugt 0,5 bis 30 Minuten.

Gewebe aus Glasfasern fransen an den Schnittstellen sehr stark aus, ein Ausfransen der Schnittkanten wird durch die Behandlung verhindert. Glasstaub, der durch den Bruch der feinen Glasfasern entsteht, wird durch eine Ausrüstung mit den erfindungsgemäßen Formulierungen fixiert. Des Weiteren zeigt ein derartig ausgerüstetes Glasgewebe elastische Eigenschaften.

**Beispiele**

Beispiel 1 (außerhalb der Erfindung)

100 kg Dimethylpolysiloxan mit eine Viskosität von 100000 mpas und Vinyl-Endgruppen werden an einem Flügelrührer mit 42 kg Dimethylpolysiloxan mit einer Viskosität von 1000 mpas und Vinyl-Endgruppen vermischt. 0,1 kg Ethinylcyclohexanol und 0,5 kg eines Platin - Divinyltetramethylsiloxan - Komplexes, gelöst in Dimethylpolysiloxan, so dass ein Platingehalt von 1 Gew. % vorhanden ist, werden unter stetigem Mischen zugegeben. 30 Minuten wird das Gemisch bis zur kompletten Vermischung weitergerührt.

100 g der so erhaltenen Masse werden mit 2 g eines Methylhydrogenpolysiloxanes mit Trimethylendgruppen und einer Viskosität von 60 mpas vermischt. Diese Mischung wird mit einem Rakel auf ein Gewebe aus Polyamid 6.6 beschichtet und 2 Minuten bei 180 °C vulkanisiert.

Das so beschichtete Gewebe zeigt ein Beschichtungsgewicht von 24 g/m$^2$ und weist folgende Messwerte auf:

| | | |
|---|---|---|
| Wassersäule: | >1000 mm | |
| Scrub : | 400 | (ISO 5981) |
| Haftung: | 110 N/5 cm | (ISO 53530) |

Beispiel 2:

100 kg Dimethylpolysiloxan mit einer Viskosität von 100000 mpas und Vinyl-Endgruppen werden an einem Flügelrührer mit 42 kg Dimethylpolysiloxan mit einer Viskosität von 1000 mpas und Vinyl-Endgruppen vermischt. 0,1 kg Ethinylcyclohexanol und 0,5 kg eines Platin - Divinyltetramethylsiloxan - Komplexes, gelöst in Dimethylpolysiloxan, so dass ein Platingehalt von 1 Gew. % vorhanden ist, 3 kg Epoxypropyltriethoxysilan und 0,3 kg Zirkonbutylat und 20 kg eines Polysiloxanes das M, D, T und Q Einheiten sowie 0,2 % Si-OH und 0,1 % SiOEt enthält, werden unter stetigem Mischen zugegeben. 30 Minuten wird das Gemisch bis zur kompletten Vermischung weitergerührt.

100 g der so erhaltenen Masse werden mit 2 g eines Methylhydrogenpolysiloxanes mit Trimethylendgruppen und einer Viskosität von 60 mpas vermischt. Diese Mischung wird mit einem Rakel auf ein Gewebe aus Polyamid 6.6 beschichtet und 2 Minuten bei 180 °C vulkanisiert.

Das so beschichtete Gewebe zeigt ein Beschichtungsgewicht von 22 g/m$^2$ und weist folgende Messwerte auf:

Wassersäule: >1000 mm

(fortgesetzt)

| Scrub : | >2000 | (ISO 5981) |
| Haftung: | 240 N/5 cm | (ISO 53530) |

**Patentansprüche**

1. Zusammensetzung bestehend aus:

   A) Organopolysiloxane, die Kohlenwasserstoffreste mit aliphatischen Kohlenstoff-Kohlenstoff-Mehrfachbindungen aufweisen
   B) gegebenenfalls Inhibitoren
   C) Platinkatalysator
   D) gegebenenfalls Haftvermittler
   E) Kondensationskatalysatoren,
   **dadurch gekennzeichnet, dass** die Zusammensetzung noch
   F) Polysiloxane mit mindestens 2 Si-OH bzw. 2 Si-OR Funktionen enthält, wobei sie T und / oder Q Funktionen enthalten und
   G) Dimethylpolysiloxane mit mindestens 3 SiH-Funktionen enthält.

2. Zusammensetzung nach Anspruch 1, **dadurch gekennzeichnet, dass** Organopolysiloxane, die Kohlenwasserstoffreste mit aliphatischen Kohlenstoff-Kohlenstoff-Mehrfachbindungen aufweisen, vinylterminierte Dimethylpolysiloxane sind.

3. Verfahren zur Beschichtung von textilen Flächengebilden, **dadurch gekennzeichnet, dass** die Zusammensetzung nach Anspruch 1 auf den textilen Träger aufgetragen wird.

4. Textiler Formkörper, **dadurch gekennzeichnet, dass** er mit einer Zusammensetzung nach Anspruch 1 oder 2 oder dem Verfahren nach Anspruch 3 beschichtet ist.

**Claims**

1. Composition consisting of:

   A) organopolysiloxanes including hydrocarbyl radicals having aliphatic carbon-carbon multiple bonds
   B) if appropriate inhibitors
   C) platinum catalyst
   D) if appropriate adhesion promoter
   E) condensation catalysts,
   **characterized in that** the composition further comprises
   F) polysiloxanes having at least 2 Si-OH or 2 Si-OR functions **in that** they comprise T and/or Q functions, and comprises
   G) dimethylpolysiloxanes having at least 3 SiH functions.

2. Composition according to claim 1, **characterized in that** organopolysiloxanes including hydrocarbyl radicals having aliphatic carbon-carbon multiple bonds are vinyl-terminated dimethylpolysiloxanes.

3. Method of coating textile fabrics, **characterized in that** it comprises applying the composition according to claim 1 to the textile substrate.

4. Textile shaped body, **characterized in that** it is coated with a composition according to claim 1 or 2 or the method according to claim 3.

**Revendications**

1. Composition constituée :

   A) d'organopolysiloxanes qui comportent des radicaux hydrocarbonés à liaisons multiples carbone-carbone aliphatiques
   B) éventuellement d'inhibiteurs
   C) d'un catalyseur au platine
   D) éventuellement d'un promoteur d'adhérence
   E) de catalyseurs de condensation,
   **caractérisée en ce que** la composition contient encore
   F) des polysiloxanes comportant au moins 2 fonctions Si-OH ou 2 fonctions Si-OR, ceux-ci contenant des fonctions T et/ou Q et
   G) des diméthylpolysiloxanes comportant au moins 3 fonctions SiH.

2. Composition selon la revendication 1, **caractérisée en ce que** les organopolysiloxanes qui comportent des radicaux hydrocarbonés à liaisons multiples carbone-carbone aliphatiques sont des diméthylpolysiloxanes terminés par des groupes vinyle.

3. Procédé pour le revêtement d'objets plats textiles, **caractérisé en ce que** la composition selon la revendication 1 est appliquée sur le support textile.

4. Corps façonné textile, **caractérisé en ce qu'**il est revêtu avec une composition selon la revendication 1 ou 2 ou par le procédé selon la revendication 3.

**EP 1 764 440 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03106759 A
- FR 2840912
- EP 0915937 B1
- EP 0378785 B1